# EUROPEAN PATENT SPECIFICATION

(11) **EP 3 475 808 B1**
(45) Date of publication and mention of the grant of the patent: **14.04.2021**
(21) Application number: 17729733.0
(22) Date of filing: 06.06.2017
(51) Int. Cl.: G06F 9/30, G06F 9/38, G06F 9/345, G06F 12/00

(54) **METHOD AND APPARATUS FOR PERFORMING SIMD GATHER AND COPY OPERATIONS**
VERFAHREN UND VORRICHTUNG ZUR DURCHFÜHRUNG VON SIMD-SAMMEL- UND -KOPIEROPERATIONEN
PROCÉDÉ ET APPAREIL DESTINÉS À L'EXÉCUTION DES OPÉRATIONS DE COLLECTE ET DE COPIE DE DONNÉES MULTIPLES D'INSTRUCTION UNIQUE (SIMD)

(30) Priority: 24.06.2016 US 201615192992
(43) Date of publication of application: 01.05.2019
(73) Proprietor: Qualcomm Incorporated, San Diego, CA 92121-1714 (US)
(72) Inventor: MAHURIN, Eric Wayne, San Diego California 92121-1714 (US); GOLAB, Jakub Pawal, San Diego California 92121-1714 (US); CODRESCU, Lucian, San Diego California 92121-1714 (US)
(74) Representative: Tomkins & Co
(86) International application number: PCT/US2017/036041
(87) International publication number: WO 2017/222798

(56) References cited:
- WO-A1-2010/088129
- WO-A2-2007/071606
- US-A- 5 887 183
- US-A1- 2012 060 016
- US-A1- 2013 326 160
- US-B1- 6 513 107

## Description

### Field of Disclosure

Disclosed aspects are directed to processor instructions and efficient implementations thereof. More specifically, exemplary aspects pertain to efficient memory instructions involving multiple data elements, such as instructions related to memory copy, scatter, gather, and combinations thereof.

### Background

Single instruction multiple data (SIMD) instructions may be used in processing systems for exploiting data parallelism. Data parallelism exists when a same or common task is to be performed on two or more data elements of a data vector, for example. Rather than use multiple instructions, the common task may be performed on the two or more data elements in parallel by using a single SIMD instruction which defines the same instruction to be performed on multiple data elements in corresponding multiple SIMD lanes. SIMD instructions may be used for variety of operations such as arithmetic operations, data movement operations, memory operations, etc. With regard to memory operations, "scatter" and "gather" are well-known operations for copying data elements from one location to another. The data elements may be located in a memory (e.g., a main memory or hard drive) and registers specified in the operations may be located on a processor or system on chip (SoC).

While a conventional load instruction may be used to read a data element from a memory location into a scalar destination register, e.g., located in the processor, a "gather" instruction on the other hand is used to load multiple data elements into a vector destination register, e.g., located in the processor. Each one of the multiple data elements may have independent or orthogonal source addresses (which may be non-contiguous in the memory), which makes SIMD implementations of a gather instruction challenging. Some implementations may execute a gather instruction through multiple load instructions to serially load each data element into its respective location in the vector destination register until the vector destination register is complete. However, serialization in this manner leads to poor performance and each component load instruction may have a variable latency depending on where each data element is sourced from (e.g., some source addresses may hit in a cache while others may not; different source addresses may have different data dependencies, etc.). If the component load instructions are implemented to update the vector destination register in-order, then it may not be possible to pipeline the updates in software or hide the bulk of this variable latency using out-of-order processing mechanisms. For implementations where out-of-order updates of the vector destination registers are possible, additional registers (e.g., for temporary storage), tracking mechanisms per data element for individual updates, and other related software and/or hardware support may be incurred. Thus, conventional implementations of gather operations may be inefficient and involve large latencies and additional hardware.

Scatter operations may be viewed as a counterpart of the above-described gather operations, wherein data elements from a source vector register, e.g., located in a processor, may be stored in multiple destination memory locations which may be non-contiguous. Some code sequences or programs may involve operations where multiple data elements are to be read from independent or orthogonal source locations (which may be non-contiguous in the memory) and copied or written to independent or orthogonal destination locations (which may also be non-contiguous in the memory). Such operations may be viewed as multiple copy operations on multiple data elements. Thus, it is desirable to use SIMD processing on such operations to implement a SIMD copying behavior of multiple data elements from orthogonal source locations to orthogonal destination locations in the memory.

While in theory, such functionality may be achieved through a SIMD gather of the multiple data elements from the multiple source locations in the memory into a gather destination vector register located in the processor and then performing a SIMD scatter of the data elements from the gather destination vector register to the multiple destination locations in the memory, implementations of such functionality may not be practical or feasible. This is because waiting for the gather destination vector register to be complete introduces the above-described inefficiencies of the conventional implementations of the SIMD gather operations. Synchronization between the component loads of the SIMD gather and the component stores of the SIMD scatter operation is also challenging if the SIMD copy were to be implemented without waiting for the gather destination vector register to be completed first, before allowing the SIMD scatter to proceed. Furthermore, implementing a SIMD gather following a SIMD scatter to execute a SIMD copy may involve transfer of a large number of data elements from the source locations in the memory using the gather destination vector register in the processor as an intermediate landing spot, and then back to destination locations in the memory. As can be appreciated, such large data transfers back and forth between the memory and the processor increase power consumption and latency of the SIMD copy.

Accordingly, there is a need for improved implementations of the above-described memory operations to exploit the benefits of SIMD processing, while avoiding the aforementioned drawbacks of conventional implementations [0006a] WO 2007/071606 A2 (28 June 2007) discloses a system, method, and computer readable medium for semi-synchronously copying data from a first portion of memory to a second portion of memory using a semi-synchronous memory copy operation instruction. The memory copy instruction is enqueued via a non-cacheable unit to a memory controller. For example, the NCU 206 allows the memory copy instruction to be enqueued directly into the memory instruction queue without first being loaded into the Ll-I cache. WO 2010/088129 A1 (5 August 2010) discloses a method for executing memory transfer instructions in a processor. In one embodiment, the method includes using memory transfer instructions that allow for data in a source memory location to be copied to a destination memory location without the use of load word and store word instructions.

### SUMMARY

Exemplary aspects of the invention are directed to systems and method for efficient memory operations. A single instruction multiple data (SIMD) gather operation is implemented with a gather result buffer located within or in close proximity to memory, to receive or gather multiple data elements from multiple orthogonal locations in a memory, and once the gather result buffer is complete, the gathered data is transferred to a processor register. In an embodiment, a SIMD copy operation is performed by executing two or more instructions for copying multiple data elements from multiple orthogonal source addresses to corresponding multiple destination addresses within the memory, without an intermediate copy to a processor register. Thus, the memory operations are performed in a background mode without direction by the processor.

For example, an exemplary aspect is directed to a method of performing a memory operation, the method comprising: providing, by a processor, two or more source addresses of a memory, copying two or more data elements from the two or more source addresses in the memory to a gather result buffer; and loading the two or more data elements from the gather result buffer to a vector register in the processor using a single instruction multiple data (SIMD) load operation.

An embodiment is directed to a method of performing a memory operation, the method comprising: providing, by a processor, two or more source addresses and corresponding two or more destination addresses of a memory, and executing two or more instructions for copying two or more data elements from the two or more source addresses to corresponding two or more destination addresses within the memory, without an intermediate copy to a register in a processor.

Another exemplary aspect is directed to an apparatus comprising a processor configured to provide two or more source addresses of a memory, a gather result buffer configured to receive two or more data elements copied from the two or more source addresses in the memory, and logic configured to load the two or more data elements from the gather result buffer to a vector register in the processor based on a single instruction multiple data (SIMD) load operation executed by the processor.

Another embodiment is directed to an apparatus comprising: a processor configured to provide two or more source addresses and corresponding two or more destination addresses of a memory, and logic configured to copy two or more data elements from the two or more source addresses to corresponding two or more destination addresses within the memory, without an intermediate copy to a register in a processor.

### BRIEF DESCRIPTION OF THE DRAWINGS

The accompanying drawings are presented to aid in the description of embodiments of the invention and are provided solely for illustration of the embodiments and not limitation thereof.
FIG. 1 illustrates a processing system configured according to exemplary aspects of this disclosure.
FIGS. 2-3 illustrate processes relating to exemplary memory operations according to exemplary aspects of this disclosure
FIG. 4 illustrates an exemplary computing device 400 in which an aspect of the disclosure may be advantageously employed.

### DETAILED DESCRIPTION

Aspects of the invention are disclosed in the following description and related drawings directed to specific embodiments of the invention. Alternate embodiments may be devised without departing from the scope of the invention. Additionally, well-known elements of the invention will not be described in detail or will be omitted so as not to obscure the relevant details of the invention.

The word "exemplary" is used herein to mean "serving as an example, instance, or illustration." Any embodiment described herein as "exemplary" is not necessarily to be construed as preferred or advantageous over other embodiments. Likewise, the term "embodiments of the invention" does not require that all embodiments of the invention include the discussed feature, advantage or mode of operation.

The terminology used herein is for the purpose of describing particular embodiments only and is not intended to be limiting of embodiments of the invention. As used herein, the singular forms "a," "an," and "the" are intended to include the plural forms as well, unless the context clearly indicates otherwise. It will be further understood that the terms "comprises", "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Further, embodiments are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the invention may be embodied in a number of different forms, all of which have been contemplated to be within the scope of the claimed subject matter. In addition, for each of the embodiments described herein, the corresponding form of any such embodiments may be described herein as, for example, "logic configured to" perform the described action.

In an exemplary aspect of this disclosure, a SIMD gather operation may be implemented by splitting the operation into two sub-operations: a first sub-operation to gather multiple data elements (e.g., from independent or orthogonal locations in a memory, which may be non-contiguous) to a gather result buffer; and a second sub-operation to load from the gather result buffer to a SIMD register, e.g., located in a processor. The exemplary SIMD gather operation may be separated by software implementations (e.g., a compiler) into the two sub-operations, and they may be pipelined to minimize latencies (e.g., using software pipelining mechanisms for the first sub-operation, to gather the multiple data elements into the gather result buffer in an out-of-order manner). The gather result buffer may be located within the memory or in proximity to the memory, and is distinguished from a conventional gather destination vector register located in a processor. Thus, per-element tracking mechanisms are not needed for the gather result buffer. Furthermore, the second sub-operation may load multiple data elements from the gather result buffer into a destination register (e.g., located in the processor) which can accommodate the multiple data elements. The data elements may be individually accessible from the destination register and may be ordered based on the order in the gather result buffer, which simplifies the load operation of the multiple data elements from the gather result buffer to the destination register (e.g., the load operation may resemble a scalar load of the multiple data elements, rather than a vector load which specifies the location of each one of the multiple data elements). Accordingly, in an exemplary aspect, multiple data elements from orthogonal source locations can be effectively gathered into the destination register in the processor by use of the gather result buffer located in the memory.

In another exemplary aspect of this disclosure, data elements from orthogonal source locations in the memory can be efficiently copied on to orthogonal destination locations in the memory. For example, a SIMD copy operation may be implemented using a combination of gather operations and scatter operations, wherein the combination may be effectively executed within the memory. In this regard, executing the SIMD copy within the memory is meant to convey that the operation is performed without using registers located in a processor (such as a conventional gather destination vector register located in the processor) for intermediate storage. For example, executing the combination of gather and scatter operations within the memory can involve the use of a network or a sequencer located in close proximity to the memory, while avoiding the transfer of the data elements between the memory and the processor. An exemplary SIMD copy instruction with per-element addressing for multiple data elements may specify a list of the gather or source addresses from which to copy the multiple data elements and a corresponding list of scatter or destination addresses to which the multiple data elements are to be written to. From these lists, multiple copy operations may be performed in an independent or orthogonal manner to copy each one of the multiple data elements from its respective source address to its respective destination address. In exemplary aspects, each one of the multiple copy operations can be allowed to complete without requiring an intermediate vector (e.g., a gather vector) to ever be completed, thus allowing for a relaxed memory ordering and out-of-order completion of the multiple copy operations.

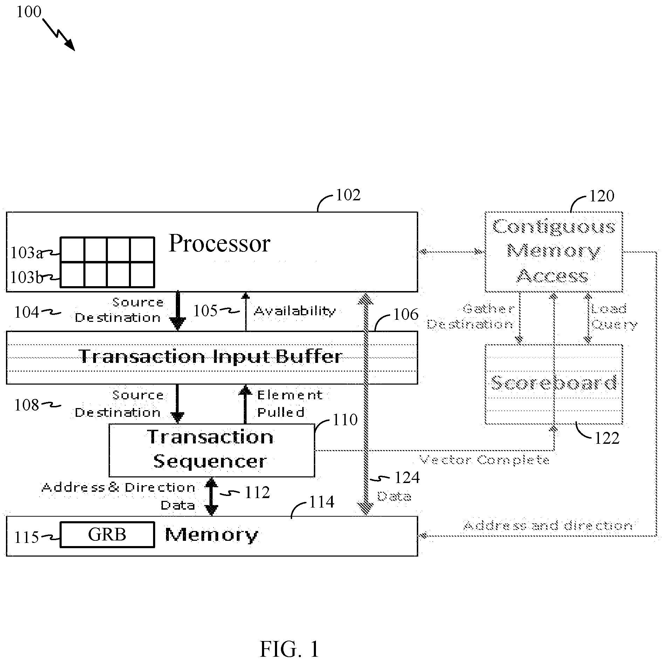

With reference now to FIG. 1, an exemplary processing system 100, configured according to the above-described exemplary aspects, will be described. As shown, processing system 100 may include processor 102 which may be configured to implement an execution pipeline. In some aspects, the execution pipeline of processor 102 may support vector instructions and more specifically, SIMD processing. Two registers 103a and 103b have been illustrated in processor 102 to facilitate the description of exemplary aspects. These registers 103a-b may belong to a register file (not shown), and in some aspects, may be vector registers. Accordingly, register 103a may be a source register and register 103b may be a vector register for example cases discussed below. For example, data elements of source vector register 103a may be specified in a conventional scatter operation. Destination vector register 103b may be used in exemplary SIMD gather operations as described below.

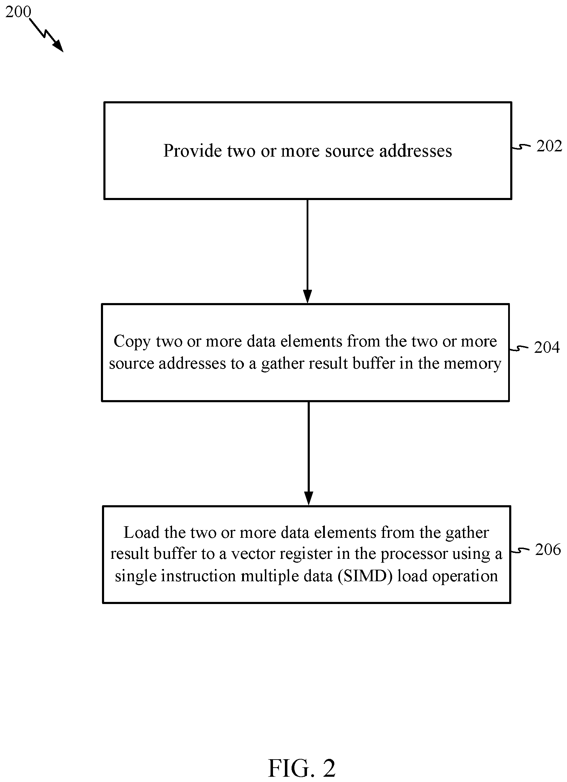

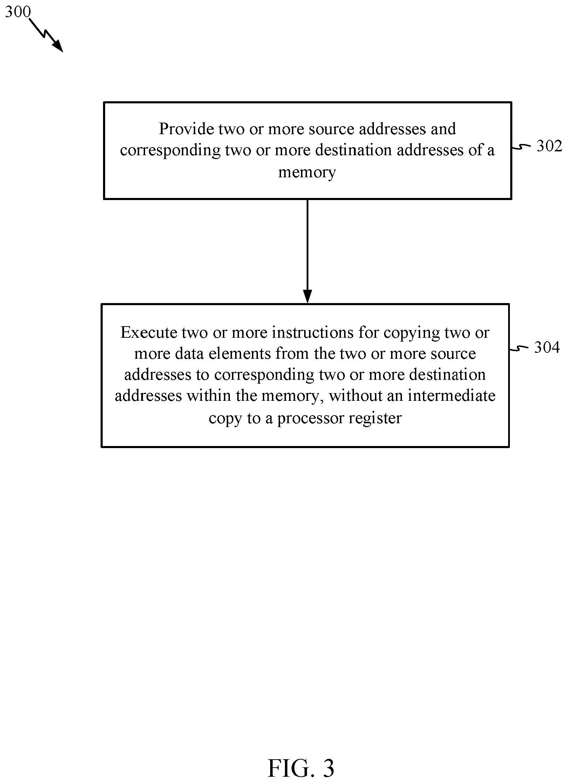

For exemplary SIMD operations, transaction input buffer 106 may receive instructions from processor 102, with addresses for source and destination operands on bus 104. Source and destination addresses on bus 104 may correspond to the exemplary SIMD gather operation (e.g., to destination vector register 103b) or the exemplary SIMD copy operation described previously, and explained further with reference to FIGS. 2 and 3 below. Transaction input buffer 106 may implement a queueing mechanism to queue and convey feedback in terms of asserting the signal shown as availability 105, to convey whether more instructions (or related operands) can be received from processor 102 or by de-asserting availability 105 if the queue is full.

The instructions which are queued in transaction input buffer 106 may be transferred on bus 108 to transaction sequencer 110. In exemplary aspects, transaction sequencer 110 may be configured to serialize or parallelize the instructions from bus 108 based on the operations and adjustable settings. For memory operations, the source and/or destination addresses may be provided to memory 114 on bus 112 (along with respective controls). Bus 112 is shown as a two-way bus, on which data can be returned from memory 114 (a control for direction of data may indicate whether data transfer is from memory 114 or to memory 114). In various alternative implementations, separate wires may be used for the addresses, control, and data buses collectively shown as bus 112.

Processing system 100 can also include processing elements such as the blocks shown as contiguous memory access 120 and scoreboard 122. In an example, if a SIMD instruction pertains to gathering data elements from contiguous memory locations, the SIMD instruction can be executed as a conventional vector operation to load data from contiguous memory locations into a vector register (e.g., register 103b) in processor 102, for which the exemplary transaction sequencer 110 may be avoided. Scoreboard 122 may function similarly as transaction input buffer 106, and as such may implement queueing mechanisms. In one aspect, where scoreboard 122 receives data from memory 114 for a conventional vector operation such as a SIMD load or a SIMD gather from contiguous memory locations, the multiple data elements may be provided through transaction sequencer 110 to scoreboard 122, and once the destination vector is complete, the destination vector may be provided to processor 102 to be updated in vector register 103b of processor 102, for example. The operations of conventional elements such as contiguous memory access 120 and scoreboard 122 have been illustrated to convey their ability to interoperate with the exemplary blocks, transaction input buffer 106 and transaction sequencer 110 for memory operations.

With combined reference to FIGS. 1-2, process 200 related to an exemplary SIMD gather operation will now be explained. As shown in block 202, processor 102 can provide two or more source addresses, for example based on a gather instruction or two or more load instructions. A compiler or other software may recognize a SIMD gather operation and decompose it into component load instructions for an exemplary SIMD gather operation in some aspects. The two or more source addresses may be orthogonal or independent, and may pertain to non-contiguous locations in memory 114. The component load instructions may specify contiguous registers or a destination vector register (e.g., register 103b) of processor 102 to which two or more data elements from the two or more source addresses are to be gathered into.

In block 204, processor 102 can implement the exemplary SIMD gather operation by sending the two or more source addresses to transaction input buffer 106, and from there on to transaction sequencer 110 on buses 104 and 108. Transaction sequencer 110 may provide, either in parallel, or in series, two or more instructions to copy the two or more data elements from the two or more source addresses to a gather result buffer (e.g., GRB 115) exemplarily shown in memory 114. Gather result buffer 115 may be a circular buffer implemented within memory 114. In some aspects, gather result buffer 115 may be located outside memory 114 (e.g., in closer proximity to memory 114 than to processor 102) and in communication with memory 114. In some aspects gather result buffer 115 may be any other appropriate storage structure, and not necessarily a circular buffer. The two or more copy operations of the two or more data elements may involve two or more different latencies. Further, the two or more copy operations of the two or more data elements to gather result buffer 115 may be performed in the background, e.g., under the direction of transaction sequencer 110 without direction by processor 102. Thus, processor 102 may perform other operations (e.g., utilizing one or more execution units which are not explicitly shown) while the multiple copy operations are being executed in the background.

Once gather result buffer 115 is complete, as shown in block 206, a load instruction may be issued to load the data elements from gather result buffer 115 to a vector register such as register 103b, in processor 102. The load may correspond to a SIMD load to load two or more data elements from contiguous memory locations within gather result buffer 115 into vector register 103b. Scoreboard 122 may also be utilized to keep track of how many copy operations have been performed to determine whether gather result buffer 115 is complete before the load instruction is issued. In some approaches, one or more synchronization instructions may be executed (e.g., by software control) to ensure that gather result buffer 115 is complete before loading the data elements from gather result buffer 115 into vector register 103b in processor 102. In this way, the latency of the copy operations to gather result buffer 115 can be hidden from processor 102 and the load instruction may be executed with precise timing to avoid delays.

With combined reference to FIGS. 1 and 3, process 300 related to an embodiment of the SIMD copy operation will be explained. The SIMD copy operation of process 300 can achieve equivalent results as a conventional SIMD gather operation followed by a conventional SIMD scatter operation. However, the SIMD copy operation can be implemented in one embodiment with less complexity and latency than implementing a SIMD gather operation followed by a SIMD scatter operation in a conventional manner.

For example, with reference to block 302, processor 102 may provide two or more source addresses and corresponding two or more destination addresses of memory 114. The two or more source addresses and/or the two or more destination addresses may be orthogonal or independent and non-contiguous. For example, a compiler may decompose a conventional gather-to-scatter sequence of instructions or code into component instructions for supplying the source and destination addresses to processor 102. Once again, processor 102 may provide the two or more source addresses and corresponding two or more destination addresses to transaction input buffer 106. Transaction input buffer 106 may supply the two or more source addresses and corresponding two or more destination addresses to transaction sequencer 110 (as explained with reference to process 200 of FIG. 2 above). Transaction sequencer 110 may supply instructions to memory 114 for performing the following operations in block 304.

In block 304, the two or more instructions may be executed for copying two or more data elements from the two or more source addresses to corresponding two or more destination addresses within the memory, without an intermediate copy to a processor register in processor 102. For example, network elements such as transaction sequencer 110 may be utilized without transferring data to processor 102 during execution of the two or more instructions for copying. Accordingly, copying the two or more data elements from the two or more source addresses to corresponding two or more destination addresses within the memory (e.g., memory-to-memory copy operations) may comprise executing a SIMD copy instruction, in a background mode without direction by processor 102. In this manner, forming an intermediate gather vector result may be avoided, and in some cases, a complete gather vector may never be fully formed in the execution of the two or more instructions for copying. Once the execution of the two or more instructions for copying is completed, transaction sequencer 110 may inform scoreboard 122, and/or processor 102 of the status of the two or more memory-to-memory copy operations as complete.

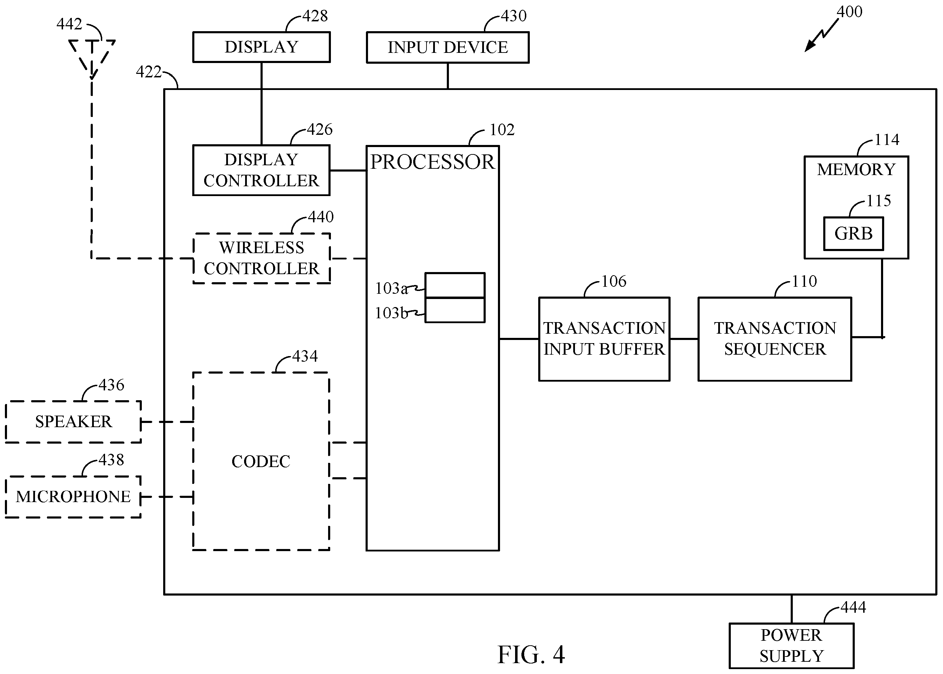

Referring to FIG. 4, a block diagram of a particular illustrative aspect of computing device 400 according to exemplary aspects. Computing device 400 includes processor 102 which may be configured to support and implement the execution of exemplary memory operations according to processes 200 and 300 of FIGS. 2-3, respectively. In FIG. 4, processor 102 (comprising registers 103a-b), transaction input buffer 106, transaction sequencer 110, and memory 114 (comprising gather result buffer 115) of FIG. 1 have been specifically identified, while remaining details of FIG. 1 have been omitted in this depiction for the sake of clarity. Although not shown, one or more caches or other memory structures may also be included in computing device 400.

FIG. 4 shows display controller 426 coupled to processor 102 and to display 428. FIG. 4 also shows several components which may be optional blocks based on particular implementations of computing device 400, e.g., for wireless communication. Accordingly, coder/decoder (CODEC) 434 (e.g., an audio and/or voice CODEC) can be optional and where present, coupled to processor 102, and optional blocks speaker 436 and microphone 438 can be coupled to CODEC 434. Wireless controller 440 (which may include a modem) may also be optional and coupled to wireless antenna 442. In a particular aspect, processor 402, display controller 426, memory 432, CODEC 434, and wireless controller 440 are included in a system-in-package or system-on-chip device 422.

In a particular aspect, input device 430 and power supply 444 are coupled to the system-on-chip device 422. Moreover, in a particular aspect, as illustrated in FIG. 4, display 428, input device 430, speaker 436, microphone 438, wireless antenna 442, and power supply 444 are external to the system-on-chip device 422. However, each of display 428, input device 430, speaker 436, microphone 438, wireless antenna 442, and power supply 444 can be coupled to a component of the system-on-chip device 422, such as an interface or a controller.

It should be noted that although FIG. 4 depicts a wireless communications device, processor 102 and memory 114 may also be integrated into a set top box, a music player, a video player, an entertainment unit, a navigation device, a personal digital assistant (PDA), a fixed location data unit, a communications device, a server, or a computer. Further, at least one or more exemplary aspects of wireless device 400 may be integrated in at least one semiconductor die.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The methods, sequences and/or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

Accordingly, the invention is not limited to illustrated examples and any means for performing the functionality described herein are included in the scope of the invention as defined by the claims.

While the foregoing disclosure shows illustrative embodiments of the invention, it should be noted that various changes and modifications could be made herein without departing from the scope of the invention as defined by the appended claims. The functions, steps and/or actions of the method claims in accordance with the embodiments of the invention described herein need not be performed in any particular order. Furthermore, although elements of the invention may be described or claimed in the singular, the plural is contemplated unless limitation to the singular is explicitly stated.

## Claims

1. A method of performing Single Instruction Multiple Data, SIMD, memory operation instructions, the method comprising:
providing (302), by a processor (102), two or more source addresses and corresponding two or more destination addresses of a memory (114) to a transaction input buffer (106);
wherein the two or more source addresses are non-contiguous; and
wherein the two or more destination addresses are non-contiguous in the memory; and
supplying, by the transaction input buffer, the two or more source addresses and corresponding two or more destination addresses to a transaction sequencer (110); and
executing (304), by the memory (114), two or more instructions supplied by the transaction sequencer, for copying the two or more data elements from the two or more source addresses to corresponding two or more destination addresses within the memory, without an intermediate copy to a register in the processor.

2. The method of claim 1, wherein copying each data element from the two or more source addresses to corresponding two or more destination addresses within the memory comprises executing a single instruction multiple data, SIMD, copy instruction.

3. The method of claim 2, comprising executing the SIMD copy instruction under the direction of the transaction sequencer without direction by the processor.

4. An apparatus (400) comprising:
a processor (102) configured to perform Single Instruction Multiple Data, SIMD, memory operation instructions, by providing two or more source addresses and corresponding two or more destination addresses of a memory (114) to a transaction input buffer (106),
wherein the two or more source addresses are non-contiguous; and
wherein the two or more destination addresses are non-contiguous in the memory;
the transaction input buffer (106) being configured to supply the two or more source addresses and corresponding two or more destination addresses to a transaction sequencer (110);
the transaction sequencer being configured to supply two or more instructions to the memory (114), wherein the memory comprises logic configured to copy the two or more data elements from the two or more source addresses to corresponding two or more destination addresses within the memory (114), without an intermediate copy to a register in the processor (102).

5. The apparatus of claim 4, comprising logic configured to copy the two or more data elements from the two or more source addresses to corresponding two or more destination addresses under the direction of the transaction sequencer without direction by the processor.

## Patentansprüche

1. Ein Verfahren zum Durchführen von SIMD-Speicheroperationsbefehlen (SIMD = Single Instruction Multiple Data bzw. einzelner Befehl mehrere Daten), wobei das Verfahren Folgendes aufweist:
Vorsehen (302), durch einen Prozessor (102), von zwei oder mehr Quellenadressen und entsprechenden zwei oder mehr Zieladressen eines Speichers (114) an einen Transaktionseingabepuffer (106);
wobei die zwei oder mehr Quellenadressen nicht zusammenhängend sind; und
wobei die zwei oder mehr Zieladressen in dem Speicher nicht zusammenhängend sind; und
Liefern, durch den Transaktionseingabepuffer, der zwei oder mehr Quellenadressen und entsprechenden zwei oder mehr Zieladressen an einen Transaktionssequenzierer (110); und
Ausführen (304), durch den Speicher (114), von zwei oder mehr Befehlen, die durch den Transaktionssequenzierer geliefert werden, zum Kopieren der zwei oder mehr Datenelemente von den zwei oder mehr Quellenadressen zu entsprechenden zwei oder mehr Zieladressen innerhalb des Speichers, und zwar ohne eine Zwischenkopie in ein Register in dem Prozessor.

2. Verfahren nach Anspruch 1, wobei das Kopieren jedes Datenelements von den zwei oder mehr Quellenadressen zu entsprechenden zwei oder mehr Zieladressen innerhalb des Speichers Ausführen eines SIMD-Kopierbefehls aufweist.

3. Verfahren nach Anspruch 2, das Ausführen des SIMD-Kopierbefehls unter der Anweisung des Transaktionssequenzierers ohne Anweisung durch den Prozessor aufweist.

4. Eine Vorrichtung (400), die Folgendes aufweist:
einen Prozessor (102), die konfiguriert ist zum Durchführen von SIMD-Speicheroperationsbefehlen (SIMD = Single Instruction Multiple Data bzw. einzelner Befehl mehrere Daten) durch Vorsehen von zwei oder mehr Quellenadressen und entsprechenden zwei oder mehr Zieladressen eines Speichers (114) an einen Transaktionseingabepuffer (106);
wobei die zwei oder mehr Quellenadressen nicht zusammenhängend sind; und
wobei die zwei oder mehr Zieladressen in dem Speicher nicht zusammenhängend sind; und
der Transaktionseingabepuffer (106) konfiguriert ist zum Liefern der zwei oder mehr Quellenadressen und entsprechenden zwei oder mehr Zieladressen an einen Transaktionssequenzierer (110); und
wobei der Transaktionssequenzierer konfiguriert ist zum Liefern von zwei oder mehr Befehlen an den Speicher (114), wobei der Speicher Logik aufweist, die konfiguriert ist zum Kopieren der zwei oder mehr Datenelemente von den zwei oder mehr Quellenadressen zu entsprechenden zwei oder mehr Zieladressen innerhalb des Speichers (114), und zwar ohne eine Zwischenkopie in ein Register in dem Prozessor (102).

5. Vorrichtung nach Anspruch 4, die Logik aufweist, die konfiguriert ist zum Kopieren der zwei oder mehr Datenelemente von den zwei oder mehr Quellenadressen zu entsprechenden zwei oder mehr Zieladressen unter der Anweisung des Transaktionssequenzierers ohne Anweisung durch den Prozessor.

## Revendications

1. Procédé pour exécuter des instructions d'opération de mémoire, SIMD, à données multiples à instruction unique, le procédé comprenant :
la fourniture (302), par un processeur (102), de deux adresses source ou plus et de deux adresses de destination ou plus correspondantes d'une mémoire (114) à une mémoire tampon d'entrée de transaction (106) ;
dans lequel les deux adresses sources ou plus ne sont pas contiguës ; et
dans lequel les deux adresses de destination ou plus sont non contiguës dans la mémoire ; et les étapes consistant à
fournir, par la mémoire tampon d'entrée de transaction, les deux adresses source ou plus et les deux adresses de destination ou plus correspondantes à un séquenceur de transaction (110) ; et
exécuter (304), par la mémoire (114), deux instructions ou plus fournies par le séquenceur de transactions, pour copier les deux ou plusieurs éléments de données des deux adresses source ou plus vers deux adresses de destination ou plus correspondantes dans la mémoire, sans une copie intermédiaire dans un registre du processeur.

2. Procédé selon la revendication 1, dans lequel la copie de chaque élément de données à partir des deux ou plusieurs adresses de source vers deux ou plusieurs adresses de destination correspondantes dans la mémoire comprend l'exécution d'une seule instruction SIMD, à données multiples à instruction unique, de copie.

3. Procédé selon la revendication 2, comprenant l'exécution de l'instruction de copie SIMD sous la direction du séquenceur de transaction sans instruction du processeur.

4. Appareil (400) comprenant :
un processeur (102) configuré pour exécuter des instructions d'opération de mémoire SIMD, à données multiples à instruction unique, en fournissant deux adresses source ou plus et deux adresses de destination ou plus correspondantes d'une mémoire (114) à une mémoire tampon d'entrée de transaction (106)
dans lequel les deux adresses sources ou plus sont non contiguës ; et
dans lequel les deux adresses de destination ou plus sont non contiguës dans la mémoire ;
la mémoire tampon d'entrée de transaction (106) étant configurée pour fournir les deux ou plusieurs adresses de source et deux adresses de destination ou plus correspondantes à un séquenceur de transaction (110) ;
le séquenceur de transaction étant configuré pour fournir deux instructions ou plus à la mémoire (114),
la mémoire comprenant une logique configurée pour copier les deux ou plusieurs éléments de données depuis les deux adresses source ou plus vers deux adresses de destination ou plus correspondantes dans la mémoire (114), sans copie intermédiaire vers un registre dans le processeur (102).

5. Appareil selon la revendication 4, comprenant une logique configurée pour copier les deux ou plusieurs éléments de données des deux ou plusieurs adresses de source vers deux ou plusieurs adresses de destination correspondantes sous la direction du séquenceur de transaction sans instruction du processeur.
